# EUROPEAN PATENT APPLICATION

(11) **EP 2 067 517 A2**
(43) Date of publication of application: **10.06.2009**
(21) Application number: 08020692.3
(22) Date of filing: 28.11.2008
(51) Int. Cl.: B01D 53/90, B01D 53/94

(54) **Systems and methods for monitoring the quality of a reducing agent**

(30) Priority: 04.12.2007 US 950141
(71) Applicant: CATERPILLAR INC., Peoria IL 61629-9510 (US)
(72) Inventor: Zemskova, Svetlana, M., Peoria, IL 61629-9510 (US); Paulson, Thomas, E., Peoria, IL 61629-9510 (US)
(74) Representative: Wagner, Karl H.

(57) **Abstract**

A method for monitoring the quality of a reducing agent used in an emission-control system is disclosed. Because emission-control systems may be used in extreme temperatures, the reducing agent used in these systems may be exposed to extreme temperatures for prolonged periods. This exposure may cause premature degradation of the reducing agent, thereby reducing the effectiveness of the emission-control system. To monitor the quality of the reducing agent, the disclosed systems and methods measure a property of the reducing agent, determine whether the measured property is out of compliance with a predetermined range, and provide a warning signal when the measured property is out of compliance.

## Description

### Technical Field

This patent disclosure relates generally monitoring the quality of a reducing agent and, more particularly to monitoring the quality of a reducing agent used in an emission-control system.

### Background

To reduce the amount of nitrogen oxides (NOx) emitted from compression engines, manufacturers often employ emission-control systems, such as selective catalytic reduction (SCR) systems. In a conventional SCR system, a pump may inject, by way of a nozzle, a reducing agent, such as an aqueous urea solution, into an after-treatment catalytic converter, where the urea solution mixes with engine exhaust. This mixing coverts the oxides of nitrogen, which are formed during combustion, to elementary nitrogen and water, thereby removing NOx from the exhaust.

Because compression engines may be used, in extreme temperatures, the urea solution used in the SCR systems of these engines may be exposed to extreme temperatures for prolonged periods. This exposure may reduce the quality of the urea solution. For example, such exposure may change the concentration level of the urea solution, but effective operation of the SCR system may depend, in part, on the concentration level of the urea solution. For example, in some SCR systems, the specified concentration level of the urea solution is 32.5 ± 0.5%. If the concentration level deviates from this specified range, the SCR system may perform inefficiently, causing the engine to emit unacceptable amounts of NOx and violate applicable emission standards.

Additionally, operating the SCR system with poor quality urea may reduce the useful life of the aftertreatment catalytic converter and other components of the SCR system and the engine. Further, maintaining the proper concentration level may prevent the urea solution from freezing, which is important because, if urea freezes, it may expand and possibly damage components of the engine and/or SCR system. An aqueous urea solution having a concentration level of 32.5% ± 0.5% has a freezing point at approximately - 11°F; other concentration levels may have higher freezing points, which may be disadvantageous.

### Brief Summary of the Disclosure

The disclosure describes, in one aspect, a method for monitoring the quality of a reducing agent used in an emission-control system. The method includes measuring the refractive index of the reducing agent and determining whether the measured refractive index of the reducing agent is out of compliance with a predetermined range. The method further includes providing a signal when the measured refractive index is out of compliance with such predetermined range.

The disclosure describes, in another aspect, a method for determining whether a product warranty applies to cover the cost of replacing a failed component of an emission-control system. The method includes measuring a property of a reducing agent used in the emission-control system and determining whether the measured property of the reducing agent is out of compliance with a predetermined range. The method further includes providing an out-of-compliance warning signal when the measured property of the reducing agent is out of compliance with the predetermined range and determining a usage value representative of a usage of the system while the measured property of the reducing agent is out of compliance with the predetermined range.

The disclosure describes, in yet another aspect, an emission-control system capable of monitoring the quality of a reducing agent used therein. The emission-control system includes a sensor for determining the refractive index of the reducing agent and a controller in communication with the sensor. The sensor is configured to provide a refractive-index measurement and the controller is configured to receive the refractive-index measurement, determine whether the refractive-index measurement is out of compliance with a predetermined range, and provide a warning signal when the refractive-index measurement is out of compliance with the predetermined range.

### Brief Description of the Drawings

Figure 1 is a schematic representation of an emission-control system, according to an embodiment of the present disclosure; and
Figure 2 is a flowchart of a program employed in connection with an embodiment of the present disclosure.

### Detailed Description

The systems and methods described herein monitor the quality of a reducing agent used in an emission-control system and provide a warning signal in the event the quality drops below a predetermined standard. As noted above, operating with a poor quality reducing agent may cause system inefficiency, harmful emissions, and premature failure of system components. To determine whether a product warranty applies for paying the cost of replacing a failed component of the emission-control system, the disclosed systems and methods may also determine whether, and the extent that, an operator used the emission-control system while the warning signal was being generated.

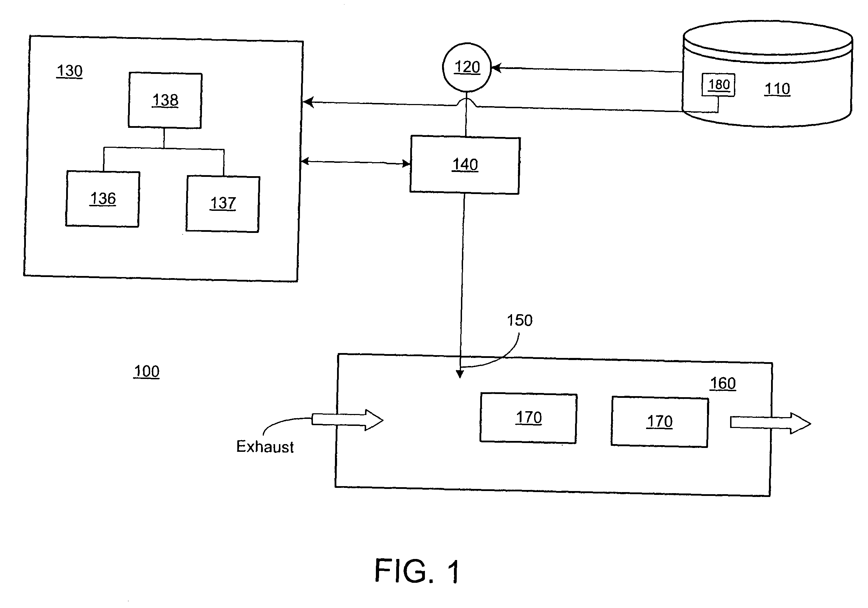

Referring now to the drawings, FIG. 1 illustrates an exemplary emission-control system 100 in which features consistent with embodiments disclosed herein may be implemented. The system 100 may include a tank 110, a pump 120, a controller 130, a dosing control 140, a nozzle 150, and an exhaust system 160. The tank 110 may be a reservoir used to hold gaseous solutions, solid-based solutions, or aqueous solutions used as a reducing agent in SCR systems. For illustrative convenience, the systems and methods disclosed herein will be described with reference to an aqueous urea solution stored in the tank 110 and used as the reducing agent in the system 100. However, it will be appreciated that other reducing agents such as an ammonia solution may be used in the system 100. The tank 110 may include a heating and cooling system to regulate the temperature of the stored urea solution. For example, the tank 110 may maintain the solution between -11°C and 50°C.

The pump 120 may be a device that is hardware or software controlled that extracts the urea solution from the tank 110 and directs it to the dosing control 140. The dosing control 140 may be a hardware or software controlled device that controls the amount of urea solution to be added to the exhaust. The nozzle 150 receives controlled amounts of the urea solution from the dosing control 140, and injects the received solution into the exhaust system 160. In an embodiment, a SCR catalyst 170 may be used to allow the NOx molecules within the exhaust gas mixture to react with ammonia molecules to produce molecular nitrogen. Alternatively, the exhaust system 160 may operate without the SCR catalyst 170.

The system 100 may include a sensor 180 for determining a property of the urea solution stored in the tank 110. In an embodiment, the sensor 180 is a refractometer with an integrated in temperature sensor for determining the refractive index of the urea solution. The refractometer 180 is configured to compensate for temperature when measuring the refractive index of the urea solution, and to transmit the measured refractive index to the controller 130. In the illustrated embodiment, the sensor 180 is located in the tank 110. It will be appreciated, however, that the sensor 180 may be located anywhere in the system 100 between the tank 110 and the nozzle 150 where an adequate measurement can be taken.

Because a correlation exists between the refractive index and the concentration level, the controller 130, based on the measured refractive index, may, according to an embodiment, determine the concentration level of the urea. For example, the controller 130 may be provided with conversion equations or tables for calculating the concentration level of the urea solution based on the measured refraction index.

The controller 130 may be a processing system that monitors and controls operations of the system 100. The controller 130 may be configured to collect information from the sensor 180 and other various sensors operating within the system 100 and the host system and to provide control signals that affect the operations of the system 100 and/or the host system. In an embodiment, the controller 130 may be part of an engine control module (ECM) that monitors and controls the operation of an engine associated with the system 100. For example, the controller may be a module that is programmed or hardwired within an ECM that performs functions dedicated to certain embodiments disclosed herein. In an embodiment, the controller may include software that is stored as instructions and data within a memory device of an ECM and which is executed by a processor operating within the ECM. Alternatively, the controller 130 may be a module that is separate from other components of a host system.

FIG. 1 shows an exemplary controller 130 configured as a separate module dedicated to the system 100 consistent with certain features relating to an embodiment of the disclosure. The controller 130 may include a processor 136, memory 137, and an interface 138. The processor 136 may be a processing device, such as a microcontroller, that may exchange data with memory 137 and the interface 138 to perform certain processes consistent with features related to the present disclosure. Although a single processor is shown in FIG. 1, it will be appreciated that the controller 130 may include a plurality of processors that operate collectively to perform functions consistent with certain embodiments of the present disclosure.

Memory 137 may be any type of storage device that is configured to store information used by the processor 136. For example, memory 137 may include magnetic semiconductors, tape, and/or optical type storage devices that may be volatile or non-volatile in nature. Moreover, memory 137 may include one or more storage devices configured in various architectures, such as redundant configurations for fault tolerant operations. It will be appreciated that the type, configuration, and architecture of memory 137 may vary without departing from the spirit and scope of the present disclosure.

The interface 138 may be an input/output interface device that receives data from the processor 136 and from entities external to the controller 130. In an embodiment, the interface 138 may by be accessible, and provide visual and audible signals, to an operator of the host system. For example, the host system may be a land vehicle and the interface 138 may be located in an operator compartment of the vehicle. Further, the interface 138 may also provide data to the processor 136 and the external entities. The interface 138 may be a module that is based on hardware, software, or a combination thereof. It will be appreciated that the configuration of the interface 138 may vary without departing from the scope of the present disclosure. For example, the interface 138 may include separate communication ports dedicated for receiving and sending data, respectively. Alternatively, the interface 138 may be integrated within the processor 136 to provide and/or send data to and/or from one or more processing elements operating within the processor 136.

To monitor the quality of the urea solution used in the system 100, the controller 130 may be provided with a program 200. The program 200 may direct the controller 130 to analyze information received from the sensor 180 and, based on that information, determine whether the quality of the urea solution is acceptable. For example, a property of the urea solution, such as refractive index, may be indicative of the overall quality of the urea solution, and the program 200 may direct the controller 130 to monitor information related to that property and thereby monitor the quality of the urea solution. Also, for example, the program 200 may instruct the controller 130 to calculate the concentration level, based on the measured refractive index, and make quality assessments of the urea solution based on the calculated concentration level. If the quality of the urea solution is below a predetermined range, the program 200 may instruct the controller 130 to monitor usage of the system 100 until the quality is restored. Further, the program 200 may instruct the controller to calculate, and provide to service personnel, a value that reflects the extent of such usage.

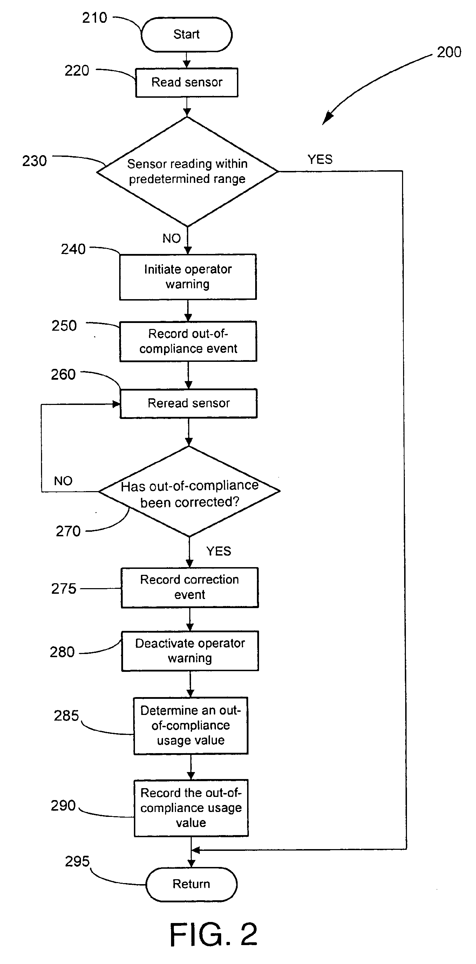

With reference to FIG. 2, the program 200, according to an embodiment, will be described. The program 200 begins at a step 210 in which the program 200 starts or begins. In step 220, the controller 130 reads the sensor 180 to obtain the refractive index measurement of the urea solution. In step 230, the controller compares the measured refractive index with a predetermined range of acceptable refractive index measurements to determine whether the sensor reading is within the predetermined range. The predetermined range of acceptable refractive index measurements may be provided on memory 137 and accessed by the processor 136 when executing the program 200. In an embodiment, the predetermined range is from 1.3817 A.U. to 1.3840 at 20°C in accordance with DIN V 70070. This predetermined range corresponds to a concentration level between 32% and 33%, which is the ideal concentration level for efficient operation of the system 100. It will be appreciated that other predetermined ranges may also be acceptable.

If the sensor reading is within the predetermined range, the controller 130 proceeds to step 295 in which the controller 130 returns to step 210. If, however, the sensor reading is outside of the predetermined range, the controller 130 continues to step 240. In step 240, the controller 130 initiates an operator warning by transmitting an out-of-compliance signal to the output device 138, which generates a warning signal. The warning signal may be visually and/or audibly observed by the operator.

The program 200 then proceeds to step 250 in which the controller records an out-of-compliance event in memory 137. The controller 130 can associate a time stamp and/or a usage stamp with the out-of-compliance event. The time stamp can be the time and date of the out-of-compliance event and the usage stamp can be, for example, miles or hours. For example, if the host system is a land vehicle, the controller 130 may record the mileage of the engine of the vehicle when the out-of-compliance event occurred. Also for example, if the host system is a marine vehicle, an aircraft, a generator set, or a machine operating within a manufacturing plant, the controller 130 can record how many hours were on the engine of the host system when the out-of-compliance event occurred.

Next, in step 260, the controller rereads the sensor 180 and then, in step 270, determines whether the out-of-compliance event has been corrected. This determination is based on whether the sensor reading is within the predetermined range. If the sensor reading is outside of the predetermined range, then out-of-compliance event has not been corrected and the controller 130 returns to step 260. However, if the sensor reading is within the predetermined range, then the out-of-compliance event has been corrected and the controller 130 proceeds to step 275.

In step 275, the controller 130 records the correction event in a fashion similar to recording the out-of-compliance event and later, in step 280, deactivates the operator warning. Next, in step 285, the controller 130 determines an out-of-compliance usage value. This value represents the extent the system 100 and/or host system was used with poor quality urea solution. In an embodiment, the out-of-compliance usage value is equal to the difference between the time, number of hours, or mileage, associated with the out-of compliance event and the correction event. Accordingly, the out-of-compliance usage value can be a time value or a distance value. The controller 130 then, in step 290 records the out-of-compliance usage value, and proceeds to step 295 in which the controller 130 returns to step 210.

Should a component of the system 100 or host system fail or malfunction during the relevant product warranty period, service personnel, when determining whether that warranty applies for paying the costs of replacing the component, may access, by way of the interface 138, the out-of-compliance usage value. For example, if the relevant product warranty is voidable due to out-of-compliance use, service personnel may access the out-of-compliance usage value, via the interface 138, and determine whether the warranty has been voided by out-of-compliance use.

### Industrial Applicability

The industrial applicability of the system 100 described herein will be readily appreciated from the foregoing discussion. A technique is described for monitoring the quality of a reducing agent used in an emission-control system and providing a warning signal in the event the quality drops below a predetermined standard. The warning received from the disclosed systems and methods enables an operator to discontinue operation of the host system until the quality is restored to an acceptable level. This prevents, among other things, inefficient operation, harmful emissions, and premature failure of system components. The present disclosure further provides a technique for determining whether, and the extent, an operator used the emission-control system while the warning signal was being generated, i.e., while the quality of the urea solution was below the predetermined standard. This can assist service personnel in determining, for example, whether a product warranty should apply for replacing any failed component of the emission-control system.

The system 100 of the present disclosure may be associated with any type of machine engine, such as internal combustion type engines, that operate in various types of host systems. For example, the system 100 may be affiliated with an engine associated with a host system such as a marine vehicle, a land vehicle, and/or an aircraft. Further, the system 100 may be associated with an engine operating in a non-vehicle based host system, such as machines operating within a manufacturing plant or generator sets. Moreover, while the system 100 is shown for illustrative purposes in a SCR system, the system 100 has potential use in other emission-control applications. Accordingly, it will be appreciated that the system 100 may be associated with any type of host system that includes various types of engines that may operate in different environments with different emission-control systems and standards.

It will be appreciated that the foregoing description provides examples of the disclosed system and technique. However, it is contemplated that other implementations of the disclosure may differ in detail from the foregoing examples. All references to the disclosure or examples thereof are intended to reference the particular example being discussed at that point and are not intended to imply any limitation as to the scope of the disclosure more generally. All language of distinction and disparagement with respect to certain features is intended to indicate a lack of preference for those features, but not to exclude such from the scope of the disclosure entirely unless otherwise indicated.

Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context.

Accordingly, this disclosure includes all modifications and equivalents of the subject matter recited in the claims appended hereto as permitted by applicable law. Moreover, any combination of the above-described elements in all possible variations thereof is encompassed by the disclosure and claims unless otherwise indicated herein or otherwise clearly contradicted by context.

## Claims

1. A method (200) for monitoring the quality of a reducing agent used in an emission-control system (100), the method comprising:
measuring the refractive index of the reducing agent (220);
determining whether the measured refractive index of the reducing agent is out of compliance with a predetermined range (230); and
providing a warning signal when the measured refractive index is out of compliance with such predetermined range (240).

2. The method of claim 1, wherein the reducing agent is a urea solution.

3. The method of claim 1, wherein a refractormeter (180) with temperature compensation measures the refractive index of the urea solution.

4. The method of claim 1, wherein the predetermined range is between 1.3817 A.U. to 1.3840 at 20°C in accordance with DIN V 70070.
